# EUROPÄISCHE PATENTANMELDUNG

(11) **EP 3 771 589 A1**
(43) Veröffentlichungstag der Anmeldung: **03.02.2021**
(21) Anmeldenummer: 20183923.0
(22) Anmeldetag: 03.07.2020
(51) Int. Cl.: B60L 3/04, B60L 5/36, B60L 5/42

(54) **ELEKTRONISCHE SCHALTUNG FÜR EIN OBERLEITUNGSFAHRZEUG, OBERLEITUNGSFAHRZEUG UND VERFAHREN ZUM BETREIBEN EINES OBERLEITUNGSFAHRZEUGS**

(30) Priorität: 29.07.2019 DE 102019211218
(71) Anmelder: Siemens Mobility GmbH, 81739 München (DE)
(72) Erfinder: Lang, Hans-Peter, 91282 Betzenstein (DE)

(57) **Zusammenfassung**

Ein Oberleitungsfahrzeug (1) weist eine elektronische Schaltung (2), einen Stromabnehmer aufweisend eine erste Stromabnehmerleiste (3) und eine zweite Stromabnehmerleiste (4), einen Antriebsumrichter (9) und eine Messeinrichtung (16) auf. Der Stromabnehmer ist dazu vorgesehen, das Oberleitungsfahrzeug (1) mit einer Versorgungsspannung aus einer Oberleitung (5) zu versorgen. Der Antriebsumrichter (9) ist dazu ausgebildet, eine Antriebsspannung für das Oberleitungsfahrzeug (1) aus der Versorgungsspannung bereitzustellen. Eine Drossel (11) der elektronischen Schaltung (2) ist mit der ersten Stromabnehmerleiste (3) verbunden. Ein Schalter (13) der elektronischen Schaltung (2) ist dazu vorgesehen, einen Lastwiderstand (12) der elektronischen Schaltung (2) mit der zweiten Stromabnehmerleiste (4) elektrisch zu verbinden oder den Lastwiderstand (12) von der zweiten Stromabnehmerleiste (4) elektrisch zu trennen. Die Drossel (11), der Lastwiderstand (12) und der Schalter (13) sind in Reihe geschaltet. Eine Steuereinrichtung (15) der elektronischen Schaltung (2) ist dazu ausgebildet, den Schalter (13) auf Basis einer von der Messeinrichtung (16) erfassten Antriebsspannung anzusteuern.

## Beschreibung

Die vorliegende Erfindung betrifft eine elektronische Schaltung für ein Oberleitungsfahrzeug, ein Oberleitungsfahrzeug und ein Verfahren zum Betreiben eines Oberleitungsfahrzeugs.

Aus dem Stand der Technik sind Oberleitungsfahrzeuge bekannt, die für einen Betrieb mittels elektrischer Energie aus einer elektrischen Oberleitung versorgt werden können. Neben Schienenfahrzeugen können auch Lastkraftwagen mittels einer über einer Straße überspannten zweipoligen Oberleitung versorgt werden. Fahrzeugseitig kontaktiert ein für den Einsatz von Lastkraftwagen entwickelter Stromabnehmer mit zwei Stromabnehmerleisten, die Oberleitung und transferiert elektrische Energie auf das Oberleitungsfahrzeug.

Bei Schienenfahrzeugen sind ein Schienenweg und die aufgespannte Oberleitung derart präzise aufgebaut, dass ein Abstand zwischen dem Schienenweg und der Oberleitung lediglich geringen Schwankungen unterworfen ist. Diese Präzision kann für Oberleitungslastkraftwagen, die eine Straße befahren, durch den Aufbau einer Straße nicht erreicht werden. Eine Kontaktgüte zwischen einem Stromabnehmer eines Oberleitungslastkraftwagens und einer Oberleitung hängt von vielen Faktoren ab und kann häufig durch Kontaktverlust gekennzeichnet sein. Zusätzlich verändern sich mit einer zunehmenden Benutzungszeit einer Straße und einem erhöhten Fahrzeugaufkommen die Bedingungen deutlich, was sich negativ auf die Kontaktgüte auswirken kann.

Ein kurzzeitiger Kontaktverlust führt zu einer Lichtbogenbildung mit reduzierter Energieübertragung auf den Oberleitungslastkraftwagen und im extremsten Fall zum Verlust der elektrischen Energieübertragung und dadurch zum Aussetzen der elektrischen Traktion. Bei wiederkehrendem Kontakt des Stromabnehmers an die Oberleitung kann es vorkommen, dass ein internes Antriebssystem des Oberleitungslastkraftwagens ein geringeres Spannungsniveau als die Oberleitung aufweist. Hierdurch entsteht aus der Oberleitung ein Ladevorgang mittels Stromstoß in das fahrzeuginterne Antriebssystem. Die hierbei entstehende Energieübertragung aus der Oberleitung in das Oberleitungsfahrzeug ist durch internen Kapazitäten und einem Spannungsunterschied zwischen den internen Kapazitäten und der Oberleitung bestimmt. Der Stromstoß wird lediglich durch die parasitären Induktivitäten der Oberleitung, des Unterwerkes und einer fahrzeugseitigen Verschaltung beeinflusst und kann beispielsweise im kA-Bereich liegen. Dieser Stromstoß in das Oberleitungsfahrzeug hinein lädt die im Antriebssystem installierten Kapazitäten über das Spannungsniveau der Oberleitung auf. Dies kann dazu führen, dass das Antriebssystem aufgrund einer Überspannung einen Traktionsverlust erleidet oder beschädigt wird.

Eine Aufgabe der vorliegenden Erfindung besteht darin, eine elektronische Schaltung für ein Oberleitungsfahrzeug und ein Oberleitungsfahrzeug bereitzustellen und ein Verfahren zum Betreiben eines Oberleitungsfahrzeugs anzugeben, die es ermöglichen, eine für ein Oberleitungsfahrzeug kritische elektrische Überspannung bei einem wiederkehrenden Kontakt eines Stromabnehmers zu einer Oberleitung zu verhindern. Diese Aufgabe wird durch eine elektronische Schaltung für ein Oberleitungsfahrzeug, ein Oberleitungsfahrzeug und ein Verfahren zum Betreiben eines Oberleitungsfahrzeugs mit den Merkmalen der unabhängigen Ansprüche gelöst. Vorteilhafte Weiterbildungen sind in abhängigen Ansprüchen angegeben.

Eine elektronische Schaltung für ein Oberleitungsfahrzeug weist eine Drossel, einen Lastwiderstand, einen Schalter und eine Steuereinrichtung auf. Die Drossel, der Lastwiderstand und der Schalter sind in Reihe geschaltet. Die elektronische Schaltung weist einen Anschluss zum Verbinden der Drossel mit einer ersten Stromabnehmerleiste eines Stromabnehmers des Oberleitungsfahrzeugs auf. Der Schalter ist dazu vorgesehen, den Lastwiderstand mit einer zweiten Stromabnehmerleiste des Stromabnehmers elektrisch zu verbinden oder den Lastwiderstand von der zweiten Stromabnehmerleiste elektrisch zu trennen. Die Steuereinrichtung ist dazu ausgebildet, den Schalter anzusteuern.

Vorteilhafterweise ermöglicht es die elektronische Schaltung, dass ein Stromstoß in das Oberleitungsfahrzeug bei einem wiederkehrenden Kontakt des Stromabnehmers zur Oberleitung teilweise kompensiert werden kann. Zum einen bewirkt die Drossel, die als Spule ausgebildet ist, dass ein Stromstoß flacher wird. Zum anderen übernimmt der Lastwiderstand einen Teil des Stroms, wodurch das Oberleitungsfahrzeug gegen eine Beschädigung oder einen Ausfall der Traktion infolge einer Überspannung im Antriebssystem geschützt ist.

In einer Ausführungsform ist ein Kondensator parallel zum Lastwiderstand geschaltet. Vorteilhafterweise ermöglicht es der Kondensator, dass festgelegt werden kann, welche Energie der Lastwiderstand aufnehmen soll, wenn ein Stromstoß in das Oberleitungsfahrzeug erfolgt.

In einer Ausführungsform weist die Drossel eine Induktivität im Bereich von 200 µH bis 1 mH, insbesondere eine Induktivität von 500 µH, auf.

In einer Ausführungsform weist der Lastwiderstand einen elektrischen Widerstand im Bereich von 2 **Ω** bis 6 **Ω**, insbesondere einen elektrischen Widerstand von 3,5 **Ω**, auf.

In einer Ausführungsform ist der Schalter ein Bipolartransistor mit isolierter Gate-Elektrode. Vorteilhafterweise ermöglicht es ein solcher Schalter, besonders kurze Anschaltzeiten zu realisieren. Dadurch kann ein abrupter Stromstoß in das Oberleitungsfahrzeug effizient aufgeteilt werden, da der Lastwiderstand durch das Schließen des Schalters einen Teil des Stromstoßes aufnehmen kann.

Ein Oberleitungsfahrzeug weist eine elektronische Schaltung, einen Stromabnehmer aufweisend eine erste Stromabnehmerleiste und eine zweite Stromabnehmerleiste, einen Antriebsumrichter und eine Messeinrichtung auf. Der Stromabnehmer ist dazu vorgesehen, das Oberleitungsfahrzeug mit einer Versorgungsspannung aus einer Oberleitung zu versorgen. Der Antriebsumrichter ist dazu ausgebildet, eine Antriebsspannung für das Oberleitungsfahrzeug aus der Versorgungsspannung bereitzustellen. Die Drossel ist mit der ersten Stromabnehmerleiste verbunden. Der Schalter ist dazu vorgesehen, den Lastwiderstand mit der zweiten Stromabnehmerleiste elektrisch zu verbinden oder den Lastwiderstand von der zweiten Stromabnehmerleiste elektrisch zu trennen. Die Messeinrichtung ist dazu vorgesehen, die Antriebsspannung zu erfassen. Die Steuereinrichtung ist dazu ausgebildet, den Schalter auf Basis der von der Messeinrichtung erfassten Antriebsspannung anzusteuern.

In einer Ausführungsform ist der Lastwiderstand ein Bremswiderstand des Oberleitungsfahrzeugs. Vorteilhafterweise kann dadurch die Verwendung eines zusätzlichen elektrischen Widerstands als Lastwiderstand entfallen.

In einer Ausführungsform ist das Oberleitungsfahrzeug ein Oberleitungslastkraftwagen.

Ein Verfahren zum Betreiben eines Oberleitungsfahrzeugs weist folgende Verfahrensschritte auf: Die Antriebsspannung des Oberleitungsfahrzeugs wird mittels der Messeinrichtung erfasst. Der Schalter wird geschlossen, wenn die Antriebsspannung einen ersten festgelegten Schwellwert überschreitet. Durch das Schließen des Schalters wird der Lastwiderstand mit der zweiten Stromabnehmerleiste des Stromabnehmers des Oberleitungsfahrzeugs verbunden.

Vorteilhafterweise ermöglicht das Verfahren eine teilweise Kompensation eines Stromstoßes in das Oberleitungsfahrzeug bei einem wiederkehrenden Kontakt des Stromabnehmers zur Oberleitung. Dadurch kann ein Ausfall der Traktion des Oberleitungsfahrzeugs oder eine Beschädigung des Oberleitungsfahrzeugs infolge einer Überspannung im Antriebssystem vermieden werden.

In einer Ausführungsform wird der Schalter geöffnet, wenn die Antriebsspannung einen zweiten festgelegten Schwellwert unterschreitet.

In einer Ausführungsform liegt die Versorgungsspannung im Bereich von 500 V bis 730 V, insbesondere im Bereich von 660 V bis 670 V. Nominell liegt die Versorgungsspannung typischerweise bei 660V.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
FIG 1 schematisch ein Oberleitungsfahrzeug mit einer elektronischen Schaltung zeigt,
FIG 2 einen elektrischen Stromstoß in ein Oberleitungsfahrzeug ohne eine elektronische Schaltung verdeutlicht,
FIG 3 ein Verfahren zum Betreiben eines Oberleitungsfahrzeugs mit einer elektronischen Schaltung zeigt und
FIG 4 einen durch das Verfahren reduzierten elektrischen Stromstoß in ein Oberleitungsfahrzeug mit einer elektronischen Schaltung verdeutlicht.

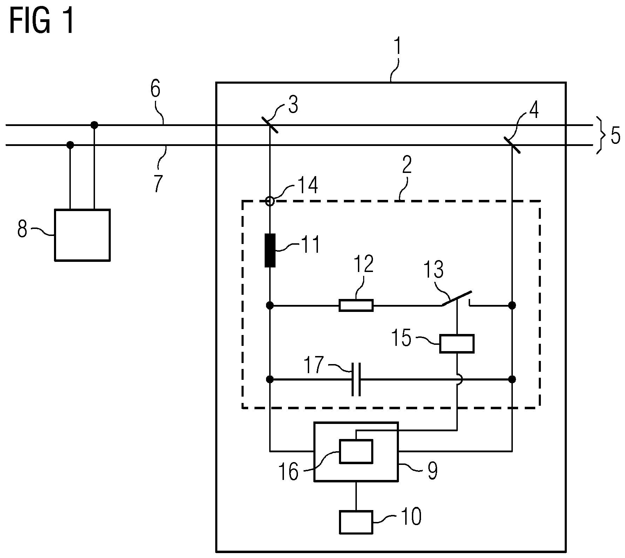

FIG 1 zeigt schematisch ein Oberleitungsfahrzeug 1 mit einer elektronischen Schaltung 2. FIG 1 zeigt lediglich Bestandteile des Oberleitungsfahrzeugs 1, die im Hinblick auf die Erfindung relevant sind.

Das Oberleitungsfahrzeug 1 kann beispielsweise ein Oberleitungslastkraftwagen sein. Dies ist jedoch nicht zwingend erforderlich. Das Oberleitungsfahrzeug 1 kann beispielsweise auch ein Schienenfahrzeug sein.

Das Oberleitungsfahrzeug 1 weist einen Stromabnehmer mit einer ersten Stromabnehmerleiste 3 und einer zweiten Stromabnehmerleiste 4 auf. Der Stromabnehmer ist dazu vorgesehen, das Oberleitungsfahrzeug 1 mit einer Versorgungsspannung aus einer Oberleitung 5 zu versorgen. Die Oberleitung 5 ist zweipolig ausgebildet und weist eine erste Leitung 6 und eine zweite Leitung 7 auf. Die erste Stromabnehmerleiste 3 ist dazu ausgebildet, die erste Leitung 6 elektrisch zu kontaktieren. Die zweite Stromabnehmerleiste 4 ist dazu ausgebildet, die zweite Leitung 7 elektrisch zu kontaktieren. Die Versorgungsspannung wird über die Oberleitung 5 von einem Unterwerk 8 bereitgestellt. Dazu ist die Oberleitung 5 an das Unterwerk 8 angebunden.

Das Oberleitungsfahrzeug 1 weist ferner einen Antriebsumrichter 9 und einen Antriebsmotor 10 auf. Der Antriebsmotor 10 ist mit dem Antriebsumrichter 9 verbunden. Der Antriebsumrichter 9 ist dazu ausgebildet, eine Antriebsspannung für das Oberleitungsfahrzeug 1, genauer gesagt für den Antriebsmotor 10 des Oberleitungsfahrzeugs 1, aus der Versorgungsspannung bereitzustellen. Die Versorgungsspannung und die Antriebsspannung weisen im Idealfall bei Kontakt des Stromabnehmers zur Oberleitung 5 identische Spannungswerte auf.

Die Versorgungsspannung kann beispielsweise im Bereich von 500 V bis 730 V liegen. Die Versorgungsspannung kann jedoch auch andere Werte aufweisen. Beispielsweise kann die Versorgungsspannung in einem Bereich von 660V bis 670V liegen. Bei Oberleitungslastkraftwagen beträgt die Versorgungsspannung typischerweise nominell 660 V. Tatsächlich kann die Versorgungsspannung auch niedriger sein, wenn beispielsweise mehrere Oberleitungsfahrzeuge 1 im Betrieb sind. Umgekehrt kann die Versorgungsspannung auch einen höheren Wert aufweisen, wenn beispielsweise eine Einspeisung von elektrischer Energie in die Oberleitung 5 durch ein Oberleitungsfahrzeug 1 oder mehrere Oberleitungsfahrzeuge 1 erfolgt. Eine solche Einspeisung kann beispielsweise im Rahmen eines Bremsvorgangs eines Oberleitungsfahrzeugs 1 erfolgen, bei dem Bremsenergie in die Oberleitung 5 eingespeist wird.

Die elektronische Schaltung 2 weist eine Drossel 11, die als Spule ausgebildet ist, einen Lastwiderstand 12 und einen Schalter 13 auf. Die Drossel 11, der Lastwiderstand 12 und der Schalter 13 sind in Reihe geschaltet. Die elektronische Schaltung 2 weist einen Anschluss 14 zum Verbinden der Drossel 11 mit der ersten Stromabnehmerleiste 3 des Stromabnehmers des Oberleitungsfahrzeugs 1 auf. In FIG 1 ist die Drossel 11 mit der ersten Stromabnehmerleiste 3 verbunden, da die elektronische Schaltung 2 im Oberleitungsfahrzeug 1 verbaut ist.

Der Schalter 13 ist dazu vorgesehen, den Lastwiderstand 12 mit der zweiten Stromabnehmerleiste 4 des Stromabnehmers elektrisch zu verbinden oder den Lastwiderstand 12 von der zweiten Stromabnehmerleiste 4 elektrisch zu trennen. In FIG 1 ist der Schalter 13 beispielhaft in einem geöffneten Zustand dargestellt, wodurch der Lastwiderstand 12 nicht mit der zweiten Stromabnehmerleiste 4 verbunden ist. In einem geschlossenen Zustand des Schalters 13 wäre der Lastwiderstand 12 mit der zweiten Stromabnehmerleiste 4 verbunden.

Die Drossel 11 weist beispielsweise eine Induktivität im Bereich von 200 µH bis 1 mH, insbesondere eine Induktivität von 500 µH, auf. Der Lastwiderstand 12 weist beispielswiese einen elektrischen Widerstand im Bereich von 2 **Ω** bis 6 **Ω**, insbesondere einen elektrischen Widerstand von 3,5 **Ω**, auf. Die Induktivität der Drossel 11 und der elektrische Widerstand des Lastwiderstands 12 können jedoch auch andere Werte aufweisen.

Der Lastwiderstand 12 kann auch ein Bremswiderstand des Oberleitungsfahrzeugs 1 sein. Ein Bremswiderstand stellt im generatorischen Betrieb des Antriebsmotors 10 eine Last dar, der die erzeugte Bremsenergie in Wärme umwandelt.

Der Schalter 13 kann beispielsweise als Bipolartransistor mit einer isolierten Gate-Elektrode (engl.: insulated-gate bipolar transistor, kurz IGBT) ausgebildet sein. Ein Bipolartransistor mit einer isolierten Gate-Elektrode bietet den Vorteil, dass besonders kurze Schaltzeiten, insbesondere kurze Anschaltzeiten beim Schließen des Schalters 13, realisiert werden können. Der Schalter 13 kann auch als ein anderes Schaltelement ausgebildet sein. Wichtig ist, dass der Schalter 13 derart ausgebildet ist, dass er auf einer Mikrosekundenzeitskala, beispielsweise innerhalb 5 ps, geschlossen werden kann.

Die elektronische Schaltung 2 weist eine Steuereinrichtung 15 auf. Die Steuereinrichtung 15 ist mit dem Schalter 13 verbunden und dazu ausgebildet, den Schalter 13 anzusteuern. Der Antriebsumrichter 9 des Oberleitungsfahrzeugs 1 weist eine Messeinrichtung 16 auf. Die Messeinrichtung 16 ist dazu vorgesehen, die vom Antriebsumrichter 9 bereitgestellte Antriebsspannung zu erfassen und die erfasste Antriebsspannung der Steuereinrichtung 15 bereitzustellen. Die Steuereinrichtung 15 ist dazu ausgebildet, den Schalter 13 auf Basis der von der Messeinrichtung 16 erfassten Antriebsspannung anzusteuern.

Die elektronische Schaltung 2 weist ferner einen Kondensator 17 auf. Der Kondensator 17 ist parallel zum Lastwiderstand 12 geschaltet. Der Kondensator 17 der elektronischen Schaltung 2 kann jedoch auch entfallen. In diesem Fall kann der Kondensator 17 auch ein Bestandteil des Antriebsumrichters 9 sein. Ist das Oberleitungsfahrzeug 1 insbesondere ein Oberleitungslastkraftwagen, so kann das Problem auftreten, dass ein Abstand zwischen einer vom Oberleitungsfahrzeug 1 zu befahrenen Straße und der Oberleitung 5 Schwankungen unterliegt. Diese Problematik gewinnt auch mit einer zunehmenden Benutzungszeit einer Straße und einem erhöhten Verkehrsaufkommen an Bedeutung, da sich der Abstand verändern kann. Dadurch kann es vorkommen, dass eine Kontaktgüte zwischen dem Stromabnehmer des Oberleitungsfahrzeugs 1 und der Oberleitung 5 variiert. Es kann auch zu einem vollständigen Kontaktverlust kommen.

Ein kurzzeitiger Kontaktverlust führt zu einer Lichtbogenbildung mit reduzierter Energieübertragung auf das Oberleitungsfahrzeug 1 und kann auch zum Verlust der elektrischen Energieübertragung und dadurch zum Aussetzen der elektrischen Traktion führen. Bei wiederkehrendem Kontakt des Stromabnehmers an die Oberleitung 5 kann es vorkommen, dass die Antriebsspannung ein geringeres Spannungsniveau als die durch die Oberleitung 5 bereitgestellte Versorgungsspannung aufweist. Hierdurch kann aus der Oberleitung 5 ein Ladevorgang mittels eines elektrischen Stromstoßes in den Antriebsumrichter 9 stattfinden. Ohne die elektronische Schaltung 2 kann der Stromstoß beispielsweise im kA-Bereich liegen. Dieser Stromstoß in den Antriebsumrichter 9 hinein kann dazu führen, dass das Oberleitungsfahrzeug 1 aufgrund einer Überspannung einen Traktionsverlust erleidet oder beschädigt wird.

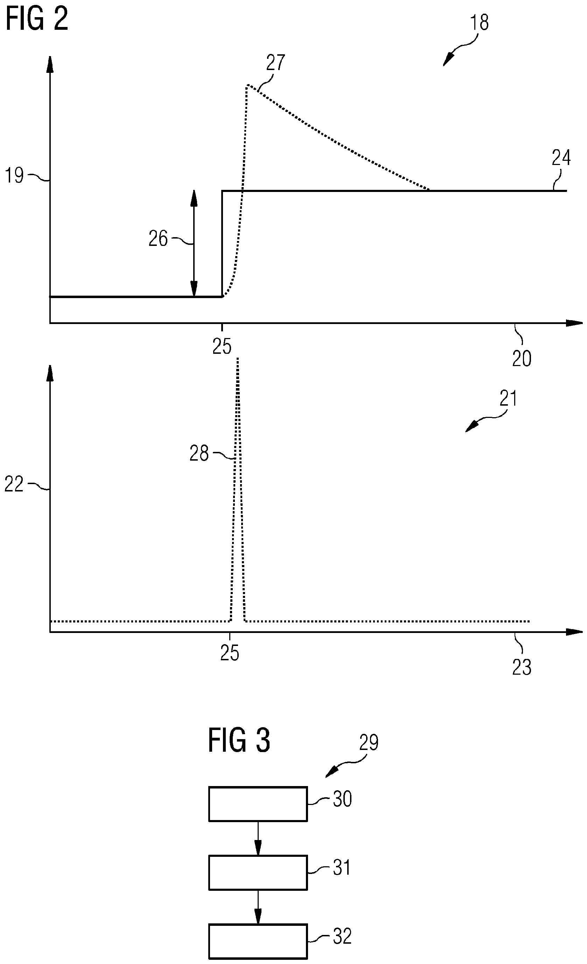

FIG 2 verdeutlicht den Stromstoß in das Oberleitungsfahrzeug 1, wenn keine Gegenmaßnahmen ergriffen werden. FIG 2 zeigt ein erstes Diagramm 18, bei dem eine Ordinate 19 eine elektrische Spannung und eine Abszisse 20 eine Zeit darstellt. Ferner zeigt FIG 2 ein zweites Diagramm 21, bei dem eine Ordinate 22 einen elektrischen Strom und eine Abszisse 23 eine Zeit darstellt. In beiden Fällen können die Zeitachsen 20, 23 eine Zeitdauer von beispielsweise 30 ms darstellen.

Das erste Diagramm 18 zeigt einen Spannungsverlauf 24 am Stromabnehmer des Oberleitungsfahrzeugs 1. Zu einem Zeitpunkt 25 steigt diese Spannung abrupt an. Dies stellt den Zeitpunkt des wiederkehrenden Kontakts des Stromabnehmers zur Oberleitung 5 dar. Ein Spannungsanstieg 26 zum Zeitpunkt 25 des wiederkehrenden Kontakts kann beispielsweise 160 V betragen. Hierbei kann beispielsweise die Antriebsspannung 500 V und die Versorgungsspannung beispielsweise 660 V betragen. Das erste Diagramm 18 zeigt ferner einen Spannungsverlauf 27 der Antriebsspannung. Der abrupte Spannungsanstieg 26 führt zu einem Anstieg der Antriebsspannung 27. Die beispielhafte Differenzspannung von 160 V addiert sich dabei auf die beispielhafte Versorgungsspannung und führt kurzfristig zu einem Anstieg der Antriebsspannung 27 auf 660 V + 160 V = 820V. Damit geht ein Stromstoß 28 einher, der im zweiten Diagramm 21 dargestellt ist. Der Stromstoß 28 kann beispielsweise 2,2 kA betragen. Die Überspannung von 820V am Antriebsumrichter 9 kann zu einem Traktionsverlust aufgrund einer Überspannungsabschaltung im Antriebsumrichter 9 führen, oder den Antriebsumrichter 9 oder weitere Bestandteile des Oberleitungsfahrzeuges 1 beschädigen.

FIG 3 zeigt schematisch ein Verfahren 29 zum Betreiben eines Oberleitungsfahrzeugs 1 mit einer elektronischen Schaltung 2 gemäß FIG 1, wobei der Kondensator 17 auch ein Bestandteil des Antriebsumrichters 9 sein kann. Das im Folgenden beschriebene Verfahren ermöglicht eine Kompensation des Stromstoßes 28 der FIG 2.

In einem ersten Verfahrensschritt 30 wird die vom Antriebsumrichter 9 bereitgestellte Antriebsspannung von der Messeinrichtung 16 erfasst. In einem zweiten Verfahrensschritt 31 wird der Schalter 13 geschlossen, wenn die Antriebsspannung einen ersten festgelegten Schwellwert überschreitet. In einem optionalen dritten Verfahrensschritt 32 wird der Schalter 13 geöffnet, wenn die Antriebsspannung einen zweiten festgelegten Schwellwert unterschreitet.

Das Verfahren 29 bewirkt, dass der Lastwiderstand 12 durch das Schließen des Schalters 13 derart belastet wird, dass ein Teil des Stromstoßes 28 vom Lastwiderstand 12 aufgenommen werden kann. So kann verhindert werden, dass im Antriebsumrichter 9 eine Überspannung entsteht, da die elektrische Energie, die die Überspannung entstehen lässt, im Lastwiderstand 12 in Wärme umgesetzt wird. Die Überspannung wird durch den ersten festgelegten Schwellwert definiert. Der erste festgelegte Schwellwert kann beispielsweise 750 V betragen. Sinkt die Antriebsspannung durch das Belasten des Lastwiderstands 12 auf den zweiten festgelegten Schwellwert, kann der Schalter 13 wieder geöffnet werden. Der zweite festgelegte Schwellwert kann beispielsweise 20 V bis 30 V unter dem ersten festgelegten Schwellwert liegen, d.h. er kann im bisher beschriebenen Beispiel 720 V bis 730 V betragen. Der zweite festgelegt Schwellwert kann aber auch anders festgelegt werden.

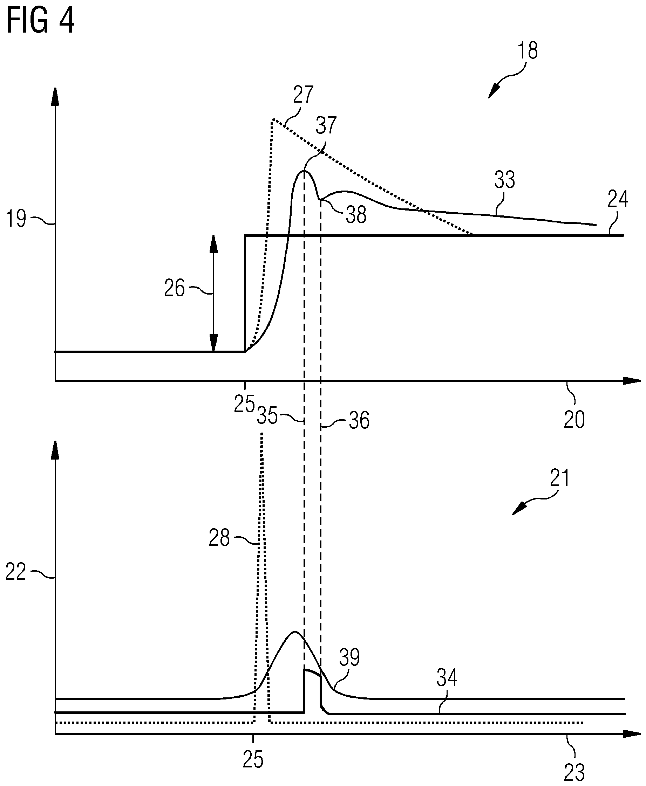

FIG 4 verdeutlicht die Kompensation des Stromstoßes 28 durch das Verfahren 29 zum Betreiben eines Oberleitungsfahrzeugs 1 mit einer elektronischen Schaltung 2. FIG 4 zeigt sämtliche Elemente der FIG 2, die in FIG 4 mit identischen Bezugszeichen versehen sind, und zusätzliche Elemente.

Das erste Diagramm 18 der FIG 4 zeigt einen Verlauf 33 der Antriebsspannung. Das zweite Diagramm 19 zeigt einen Stromverlauf 34 am Lastwiderstand 12. Zu einem ersten Zeitpunkt 35 überschreitet die Antriebsspannung 33 den ersten festgelegten Schwellwert 37. Zum ersten Zeitpunkt 35 wird der Schalter 13 geschlossen, wodurch der Lastwiderstand 12 den Stromstoß 28 teilweise übernimmt. Der Lastwiderstand 12 kann beispielsweise einen Strom von 200 A übernehmen. Zu einem zweiten Zeitpunkt 36 unterschreitet die Antriebsspannung 33 den zweiten festgelegten Schwellwert 38 und der Schalter 13 wird geöffnet, sodass der Lastwiderstand 12 keinen Strom übernimmt.

Das zweite Diagramm 21 zeigt ferner einen kompensierten Stromstoß 39. Der kompensierte Stromstoß 39 kann beispielsweise ein Maximum von 330 A aufweisen und ist deutlich niedriger als der Stromstoß 28, dessen Maximum beispielsweise bei 2,2 kA liegen kann. Hierbei bewirkt die Drossel 11, dass der Stromstoß 39 flach ausgebildet ist, wodurch der Lastwiderstand 12 nicht den gesamten Stromstoß 28 aufnehmen muss. Die Energie, die vom Lastwiderstand 12 kurzfristig übernommen werden muss, hängt von Kapazitäten im Oberleitungsfahrzeug 1 und der Spannungsdifferenz zwischen Versorgungsspannung und Antriebsspannung ab.

Die Ansteuerung des Schalters 13 muss mit einem hoch dynamischen Schaltelement, z.B. mit dem IGBT, erfolgen, da ansonsten die Übernahme des Stoßstromes nicht gewährleistet ist. Insgesamt bewirkt also die Kombination der Drossel 11 zusammen mit dem geschalteten Lastwiderstand 12, dass lediglich ein kompensierter Stromstoß 39 in das Oberleitungsfahrzeug 1 erfolgt. Dadurch ist das Oberleitungsfahrzeug 1 gegen eine Überspannung im Antriebsumrichter 9 geschützt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektronische Schaltung (2) für ein Oberleitungsfahrzeug (1),
mit einer Drossel (11), einem Lastwiderstand (12), einem Schalter (13) und einer Steuereinrichtung (15),
wobei die Drossel (11), der Lastwiderstand (12) und der Schalter (13) in Reihe geschaltet sind,
wobei die elektronische Schaltung (2) einen Anschluss (14) zum Verbinden der Drossel (11) mit einer ersten Stromabnehmerleiste (3) eines Stromabnehmers des Oberleitungsfahrzeugs (1) aufweist,
wobei der Schalter (13) dazu vorgesehen ist, den Lastwiderstand (12) mit einer zweiten Stromabnehmerleiste (4) des Stromabnehmers elektrisch zu verbinden oder den Lastwiderstand (12) von der zweiten Stromabnehmerleiste (4) elektrisch zu trennen,
wobei die Steuereinrichtung (15) dazu ausgebildet ist, den Schalter (13) anzusteuern.

2. Elektronische Schaltung (2) gemäß Anspruch 1,
wobei ein Kondensator (17) parallel zum Lastwiderstand (12) geschaltet ist.

3. Elektronische Schaltung (2) gemäß Anspruch 1 oder 2, wobei die Drossel (11) eine Induktivität im Bereich von 200 µH bis 1 mH, insbesondere eine Induktivität von 500 µH, aufweist.

4. Elektronische Schaltung (2) gemäß einem der Ansprüche 1 bis 3,
wobei der Lastwiderstand (12) einen elektrischen Widerstand im Bereich von 2 **Ω** bis 6 **Ω**, insbesondere einen elektrischen Widerstand von 3,5 **Ω**, aufweist.

5. Elektronische Schaltung (2) gemäß einem der Ansprüche 1 bis 4,
wobei der Schalter (13) ein Bipolartransistor mit isolierter Gate-Elektrode ist.

6. Oberleitungsfahrzeug (1)
mit einer elektronischen Schaltung (2) gemäß einem der vorhergehenden Ansprüche, einem Stromabnehmer aufweisend eine erste Stromabnehmerleiste (3) und eine zweite Stromabnehmerleiste (4), einem Antriebsumrichter (9) und einer Messeinrichtung (16),
wobei der Stromabnehmer dazu vorgesehen ist, das Oberleitungsfahrzeug (1) mit einer Versorgungsspannung aus einer Oberleitung (5) zu versorgen,
wobei der Antriebsumrichter (9) dazu ausgebildet ist, eine Antriebsspannung für das Oberleitungsfahrzeug (1) aus der Versorgungsspannung bereitzustellen,
wobei die Drossel (11) mit der ersten Stromabnehmerleiste (3) verbunden ist,
wobei der Schalter (13) dazu vorgesehen ist, den Lastwiderstand (12) mit der zweiten Stromabnehmerleiste (4) elektrisch zu verbinden oder den Lastwiderstand (12) von der zweiten Stromabnehmerleiste (4) elektrisch zu trennen,
wobei die Messeinrichtung (16) dazu vorgesehen ist, die Antriebsspannung zu erfassen,
wobei die Steuereinrichtung (15) dazu ausgebildet ist, den Schalter (13) auf Basis der von der Messeinrichtung (16) erfassten Antriebsspannung anzusteuern.

7. Oberleitungsfahrzeug (1) gemäß Anspruch 6,
wobei der Lastwiderstand (12) ein Bremswiderstand des Oberleitungsfahrzeugs (1) ist.

8. Oberleitungsfahrzeug (1) gemäß Anspruch 6 oder 7,
wobei das Oberleitungsfahrzeug (1) ein Oberleitungslastkraftwagen ist.

9. Verfahren (29) zum Betreiben eines Oberleitungsfahrzeugs (1) gemäß einem der Ansprüche 6 bis 8 mit folgenden Verfahrensschritten (30, 31)
- Erfassen der Antriebsspannung des Oberleitungsfahrzeugs (1) mittels der Messeinrichtung (16),
- Schließen des Schalters (13), wenn die Antriebsspannung einen ersten festgelegten Schwellwert (37) überschreitet.

10. Verfahren (29) gemäß Anspruch 9 mit folgendem weiteren Verfahrensschritt (32):
- Öffnen des Schalters (13), wenn die Antriebsspannung einen zweiten festgelegten Schwellwert (38) unterschreitet.

11. Verfahren (29) gemäß Anspruch 9 oder 10,
wobei die Versorgungsspannung im Bereich von 500 V bis 730 V, insbesondere im Bereich von 660 V bis 670 V, liegt.
